# EUROPEAN PATENT SPECIFICATION

(11) **EP 3 302 095 B1**
(45) Date of publication and mention of the grant of the patent: **10.03.2021**
(21) Application number: 16725164.4
(22) Date of filing: 27.05.2016
(51) Int. Cl.: A23K 50/40, A23K 50/48, A23J 1/04, A23J 3/00, A23J 3/30, A23J 3/34

(54) **NOVEL MARINE PROTEIN HYDROLYSATES AND USES THEREOF**
NEUARTIGE MEERESPROTEINHYDROLYSATE UND VERWENDUNGEN DAVON
NOUVEAUX HYDROLYSATS DE PROTÉINES D'ORIGINE MARINE ET LEURS UTILISATIONS

(30) Priority: 29.05.2015 NO 20150692
(43) Date of publication of application: 11.04.2018
(73) Proprietor: Calanus AS, 9272 Tromsø (NO)
(72) Inventor: RØRSTAD, Gunnar, N-9007 Trømsø (NO); ABRAHAMSEN, Hogne, N-9024 Tomasjord (NO); TANDE, Kurt, N-8450 Stokmarknes (NO)
(74) Representative: Onsagers AS
(86) International application number: PCT/EP2016/062029
(87) International publication number: WO 2016/193155

(56) References cited:
- EP-B1- 0 051 656
- COWEY, C.B. AND CORNER, E.D.S.: "Amino acids and some other nitrogenous compounds in Calanus finmarchicus", JOURNAL OF THE MARINE BIOLOGICAL ASSOCIATION OF THE UNITED KINGDOM., vol. 43, 1963, - 1963, pages 485-493, XP002759276, Cambridge, U.K.
- BIRTHE VANG ET AL: "Oil extraction From the Copepod Calanus finmarchicus Using Proteolytic Enzymes", JOURNAL OF AQUATIC FOOD PRODUCT TECHNOLOGY, vol. 22, no. 6, 2 November 2013 (2013-11-02), pages 619-628, XP055282315, US ISSN: 1049-8850, DOI: 10.1080/10498850.2012.686008
- Malgorzata Anita Bryszewska ET AL: "Determination of selenium and its compounds in marine organisms", JOURNAL OF TRACE ELEMENTS IN MEDICINE AND BIOLOGY, vol. 29, 1 January 2015 (2015-01-01), pages 91-98, XP55527831, US ISSN: 0946-672X, DOI: 10.1016/j.jtemb.2014.10.004

## Description

### FIELD OF INVENTION

The present disclosure concerns novel protein hydrolysates of marine origin and methods of producing the same. The disclosure also concerns the use of such hydrolysates as palatants and as a food flavoring agents.

### BACKGROUND OF INVENTION

Fish has long been recognized as health-promoting food, and as a source of nutrients or ingredients with functional properties for use both in food and feed. Protein hydrolysates from fish and other marine sources have many utilities, for example in production of specialty ingredients for human consumption, in aquaculture and domestic animal feed, and as an additive in pet food. They may also be used as fish-based fertilizer for agriculture and home gardening, as ingredients in fermentation media, and as a source of pharmaceutically active compounds. New human consumption applications are also recognized, such as sports nutrition and high protein powder-supplements, especially for humans with dietary conditions preventing them from using dairy or other grain based proteins.

Protein hydrolysates are thus recognized in the field of nutrition as relevant nutrient sources and raw materials to improve feed and animal performances, as well as in human nutrition. First and foremost this regards the nutritional value of protein hydrolysates, highly valued due to its protein content, amino acid profile and high digestibility. It has also been shown that salmon protein hydrolysates may be used as palatability-enhancing agents for use in animal foods (Folador, J.F. et al. Fish meals, fish components, and fish protein hydrolysates as potential ingredients in pet foods. J. Anim. Sci. Vol. 84 No. 10, p. 2752-2765, 2006).

In aquaculture, the provision of a suitable feed is essential. The nutritional requirements depend on the species farmed and their developmental stage. In the area of aquaculture, WO 2014114767 has proposed that krill hydrolysates could help satisfy the need for supplements in aquaculture feed when the availability of fish meals falls short of the demand in the coming years. Fish meals, as well as fish oils, are crucial for covering nutritional requirements and achieving feed performance, affecting both feed palatability, feed utilization and fish health. In WO 2014114767, krill hydrolysates are proposed as the solution to the need for highly specific dietary properties of feeds in order to satisfy cultured fish requirements, and to overcome the adverse effects on fish health of diets containing low fish meal and/or plant-based materials. The krill hydrolysates are shown to have good organoleptic properties for post-larval fish.

EP 0051656 B1 disclose a process for production of fish stimuli (substances), in which protein in a given raw material is biochemically broken down by a reproducible process to specific water-soluble substances. In the examples finely divided feed calanus with grated reel feed filled mackerel intestine or whole reel feed calanus was broken down by the process and the mixtures were used as stimuli for substances for production of artificial bait and fodder for fish. In Cowey and Corner, Journal of the marine biological association of the United Kingdom, vol. 43, 1963, - 1963, pages 485-493, a protein hydrolysate was prepared when the amino acid content of the copepod *Calanus finmarchicus* was determined. It is stated in the discussion that the protein extracted from Calanus is unremarkable is its amino acid composition.

Vang et al JOURNAL OF AQUATIC FOOD PRODUCT TECHNOLOGY,vol. 22, no. 6, 2 November 2013 (2013-11-02), pages 619-628, a protein concentrate is produced during lipid extraction of *Calanus finmarchicus* and its ash content determined. No further use of the protein hydrolysates are discussed.

The abstract of Gulbrandsen, K. E.: "Experiments with red feed (Cal anus finmarchicus) and krill (Meganyctiphanes norvegica) as protein sources in feeds tocoalfish (Pollachius virens)", describes the use of intact *Calanus finmarchicus* as feed for fish.

Bryszewska et al, Journal of trace elements in medicine and biology, vol. 29, 1 January 2015 (2015-01-01), pages 91-98, investigates the quantity and type of selenium compounds in fish and other marine organisms, including *Calanus finmarchicus,* in order to evaluate dietary information concerning Se content in seafood.

Today's pet food industry is growing rapidly. Pet owners are demanding high quality diets for their pets, and protein hydrolysates are recognized in the field of animal nutrition as relevant raw materials to improve feed and animal performances. In designing foods for animals, particularly for companion animals such as cats and dogs, optimal animal health or wellness through good nutrition is an important goal. However, even the most nutritious animal food is of little value if the animal rejects or refuses to eat the food, or if the intake of the food is restricted because the animal finds the food unpalatable. Thus in the pet food industry, palatability enhancers (PEs) are extremely useful, if not necessary, for feed consumption. Many pets and cats in particular, may even refuse to eat pet food without the addition of PEs. Different PEs or palatants, for use in pet food, are well known in the art. Commonly both "meat flavor" and "chicken flavor" are used as flavorings for terrestrial animals. In AU2011100404 A4 poultry liver hydrolysates are suggested to enhance the palatability of dog food, while WO2005053424 suggests different extracts of a herb or spice (that comprises thymol and carvacrol as substantial flavorant ingredients) as palatability enhancers.

In the sector of human nutrition, flavorings are being used to impart odor and/or taste to foods. Numerous flavorings and other food ingredients with flavoring properties are known and readily used in and on foods. Natural flavorings, in the sense of ingredients, are often used as food additives to compliment food for a better look and/or taste. Hydrolyzed proteins, especially from a variety of vegetable sources, are well known in the human food industry. For instance, they are commonly employed as a component in dehydrated soups and sauces and in other processed foodstuffs as flavorings. Such vegetable protein hydrolysates are for instance frequently used as ingredients to create an authentic bouillon or broth taste.

Crustacean hydrolysates have not previously been tested as palatability enhancers in animal or pet food, or as flavorings in human food industry.

The inventors have surprisingly found that crustacean hydrolysates, especially such as protein hydrolysates deriving from the marine copepod *Calanus finmarchicus,* show superior characteristics in respect of organoleptic properties when used in animal feed, for example as supplements to commercially available pet food or as palatants in pet supplement or pet pharmaceutical products. The inventors have also discovered the unique marine flavor of these crustacean hydrolysates, and suggest the use of these as flavoring ingredients, for instance to provide a unique marine flavor or round off the taste of soups, sauces, meat products, snacks, and other dishes, as well as for the production of ready-to-cook soups and bouillons.

### SUMMARY OF THE INVENTION

It is disclosed protein hydrolysates comprising high amounts of arginine and taurine, particular wherein the molecular distribution is such as at least 70 % of the Mw is below 1000 Da. Preferably the protein hydrolysates is derived from a crustacean, more preferably derived from a marine copepod, preferably a copepod of the genus *Calanus,* such as *Calanus finmarchicus.*

The present disclosure provides a protein hydrolysate comprising at least 10 mg taurine and at least 50 mg arginine pr. g of protein.

A method of producing a protein hydrolysate is provided, comprising the steps of a) grinding *Calanus* raw material and mixing in water as necessary, b) heating the raw material to desired temperature, c) adjusting pH and/or salt as necessary, d) adding enzyme(s), e) running hydrolysis for desired time, f) heat-inactivation of the enzyme activity, and g) removal of solids and lipids and recovering of the protein hydrolysate

A protein hydrolysate produced by this method is also provided.

The invention is the use of protein hydrolysate as described as a palatability enhancer, to enhance the palatability of an animal feed for dog or cats, pet supplement, pet pharmaceutical or other composition for consumption by a dog or a cat.

The invention includes the use of the protein hydrolysate as an palatability enhancer in dog or cat feed. Pet supplement/pharmaceutical having enhanced palatability comprising the protein hydrolysate is included in the scope of this invention, wherein the hydrolysate constitute from 0.1 to 5 % by weight of the composition.

The use of protein hydrolysate according to the invention as a food flavoring agent, in a food for a cat or a dog is also described, wherein the protein hydrolysate obtained from the copepod of the genus *Calanus,* such as *Calanus finmarchicus.*

In addition, a method of preparing a pet food having enhanced palatability is provided by a) using a palatability-enhancing composition comprising a protein hydrolysate as described herein, b) applying said palatability-enhancing composition to a pet food and c) recovering said pet food having enhanced palatability.

A method for increasing the palatability of a pet food for consumption by adding a protein hydrolysate as described is also described.

### BRIEF DESCRIPTION OF FIGURES

**Figure 1** shows the digestibility of one embodiment of the present disclosure

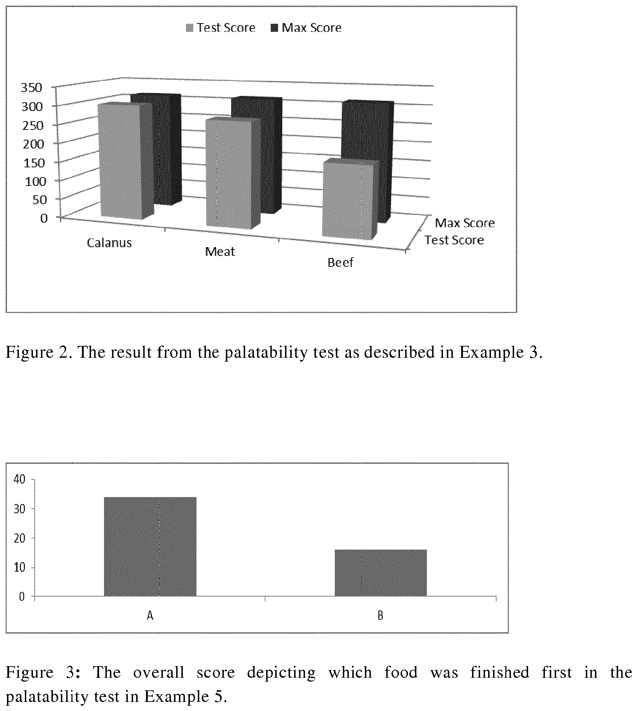

**Figure 2** shows the palatability score from the experiment as described in example 3.

### DETAILED DESCRIPTION OF THE INVENTION

The present disclosure concerns novel protein hydrolysates derived from the marine copepod *Calanus finmarchicus* comprising high amounts of arginine and taurine, and methods of producing the same. The disclosureis a protein hydrolysate wherein 70 % of the peptides of these hydrolysates correspond to peptides of lower molecular weight than 1000 Da. The invention is the use of such hydrolysates to enhance the palatability of compositions for consumptions by cats and dogs, such as animal feed, pet food, pet supplements and pet pharmaceutical products. In addition, the disclosure provides the use of the novel protein hydrolysate as a food flavoring agent.

It is surprisingly found that the present disclosure, in addition to have favorable nutritional properties for terrestrial animals such as humans, dogs and cats, have a very pleasant flavor. Experiments have revealed the excellent properties of the present disclosure, both as palatants and as a flavoring agent.

It is shown that animals prefer feed enriched with *Calanus* hydrolysate, both in liquid form and in powder form, over standard feed. Compositions containing the protein hydrolysates according to the present disclosure were ingested more frequently and at a higher rate by animals compared to the control compositions. It is also shown the potential of the present invention for use as palatants in pet supplement products.

The protein hydrolysates according to the present disclosure were also tested against well-known PEs (beef and meat flavor) and against other marine hydrolysates (from salmon) in a two-bowl test, demonstrating the superior properties of the disclosure.

The pleasant flavor of the protein hydrolysate was tested in seafood dishes, where its potential as a food flavoring agent was demonstrated.

In the description the terms "protein hydrolysates", "fish protein hydrolysates", "protein hydrolysates of aquatic or marine origin" are used interchangeably. The same applies for "animal feed", "animal diet" and "pet food".

The term "protein hydrolysate" refers to a composition comprising amino acids, peptides and proteins prepared by treating a material comprising proteins with acid, alkali or one or several enzymes at appropriate pH and temperature. Such composition may also be obtained by autolysis. Protein hydrolysates comprise hydrolyzed material, meaning that the proteins are more or less degraded dependent on the degree of hydrolysis. As it follows, protein hydrolysates may be characterized based on their molecular weight distribution.

A hydrolysate may be a source of protein or protein-derived nutrients, as well as other water-soluble components being naturally present in the raw material. The protein hydrolysates for use in the present invention may be in any form, including liquids, frozen, or dried. Protein hydrolysates may be produced as liquids, liquid concentrates, pastes or powders, with or without preservatives or co-drying agents as applicable.

According to the invention the protein hydrolysate may be presented as a liquid concentrate. Unless specifically stated otherwise, percentages are expressed herein by weight of the liquid concentrate product.

Percentages may also be expressed on "a dry matter basis". The person skilled in the art will appreciate that the term "on a dry matter basis" means that an ingredient's concentration or percentage in a composition is measured after the free water has been removed or subtracted.

As used herein, the term "crustaceans" refers to a large family of marine arthropods, which includes common members as crabs, lobsters, crayfish, shrimp, and krill, in addition to the group of the smaller "copepods". "Copepods" are a group of small free living crustaceans found in the sea and freshwater habitats. Some of the species are planktonic, which means that they are drifting in the sea, and some are benthic (living on the ocean floor). Yet other species may live in freshwater habitats and other wet terrestrial places, such as swamps, under leaf fall in wet forests, bogs, springs, ephemeral ponds and puddles, damp moss, or water-filled recesses (phytotelmata) of plants such as bromeliads and pitcher plants. Preferably the "copepods" of the present disclosure are marine planktonic, such as those of the order Calanoida.

The term "amino acid" means a molecule containing both an amino group and a carboxyl group. In some embodiments, the amino acids are α, β, γ and δ-amino acids, including their stereoisomers and racemates.

The term "essential amino acids" refers to the amino acids that cannot be synthesized *de novo,* from scratch, by the organism considered, and therefore must be supplied in the diet. The nine amino acids humans cannot synthesize are phenylalanine, valine, threonine, tryptophan, methionine, leucine, isoleucine, lysine, and histidine. The essential amino acids for dogs also include arginine, while both arginine and taurine must be supplied in a cat diet.

Some amino acids are considered "conditionally essential" in the human diet, meaning their synthesis can be limited under special pathophysiological conditions, such as prematurity in the infant or individuals in severe catabolic distress. These six are arginine, cysteine, glycine, glutamine, proline and tyrosine.

The term "taurine", or "2-aminoethanesulfonic acid", refers to the derivate of cysteine, an amino acid comprising a thiol group. Taurine is an organic acid containing an amino group and a sulfonate group. Taurine is sometimes called an amino acid, as it contains an amino group. However, it is not an amino acid in the usual biochemical meaning of the term, which refers to compounds containing both an amino and a carboxyl group. A study of mice hereditarily unable to transport taurine suggests it is needed for proper maintenance and functioning of skeletal muscles. In addition, it has been shown to be effective in removing fatty liver deposits in rats, preventing liver disease, and reducing cirrhosis in tested animals. Evidence indicates taurine is beneficial for adult human blood pressure and possibly, the alleviation of other cardiovascular ailments (in humans suffering essential hypertension, taurine supplementation resulted in measurable decreases in blood pressure).

The term "animal" as used herein refers to the group of terrestrial animals or vertebrates, such as birds, mammals, amphibians and reptiles. The terrestrial animals of the present invention are pets, such as cats and dogs.

The term "animal feed", "animal diet" and "pet food" are used interchangeably. As used herein all these terms are meant to describe compositions for animal consumption, including but not limited to complete feed, whether in dry/pellet form, moist or in canned forms, treats, snacks and the like.

The term "pet supplement products" as used herein refers to any substance for oral consumption by pet animals, offered separately from formulated feed, treats or snacks, intended for specific benefit to the animal by means other than provision of nutrients recognized as essential or for provision of essential nutrients for the intended effect on the animal beyond normal nutritional needs, but not including legally defined drugs.

The term "pet pharmaceutical product" as used herein refers to delivery systems for legally defined drugs for oral use.

Palatability is used to describe taste properties, what is pleasing or tasting to the animal or human of interest. For something to be palatable it means it is sufficiently agreeable in flavor to be eaten, that it comprises the property of being acceptable to the mouth. The palatability of a food or a feed, unlike its flavor or taste, varies with the state of an individual: it is lower after consumption and higher when deprived. Unpalatability, on the other side, describes the property of being unacceptable to the mouth. The term "palatable" is meant to include organoleptic properties in general. Organoleptic properties are the total aspects of food or other substances as experienced by the senses, including taste, sight, smell, and touch, in cases where dryness, moisture, and stale-fresh factors are to be considered.

The terms "enhance", "promote", "increase" and "improve" are used herein interchangeably. A technical feature or activity or effect of interest is "enhanced" if it is better/higher in a tested composition when compared to a standard composition. As an example, the palatability of an animal feed is enhanced if the tested animal feed comprising the present disclosure is considered better, or the composition is consumed more frequently or faster by the animal of interest, than the conventional animal feed.

### Protein hydrolysate and methods of producing a protein hydrolysate

The disclosure provides a protein hydrolysate comprising high amounts of naturally occurring arginine and taurine. The protein hydrolysates are derived from a copepod of the genus *Calanus,* such as *Calanus finmarchicus,* using freshly harvested, frozen/thawed or dehydrated raw material.

According to one of the embodiments of the disclosure the protein hydrolysates may be obtained by any method known to the person skilled in the art such as, but not limited to, conventional protein hydrolysate production technology. For example, protein hydrolysates may be prepared according to methods as described in US patent number 5589357, US 4879131, US 5039532 and US 6403142.

Independent of the procedure of obtaining the protein hydrolysates, one typical composition may be as shown in Table 1.

**Table 1: Typical composition of a protein hydrolysate according to the present disclosure, as exemplified by Calanus hydrolysate.**

| **NUTRITIONAL VALUES** | |
|---|---|
| COMPOSITION (%) TYPICAL | |
| Protein | 33,6 |
| Fat | 0,5 |
| Dry matter | 46,2 |
| NaCl | 8,7 |
| Carbohydrate | 2,2 |
| Ash | 9,9 |

| **AMINO** | |
|---|---|
| **ACID mg/g** | |
| **protein** | **TYPICAL** |
| Aspartic Acid | 81,1 |
| Serine | 33,6 |
| Glutamic Acid | 116,7 |
| Proline | 34,2 |
| Glycine | 67,6 |
| Alanine | 62,5 |
| Valine | 47,2 |
| Isoleucine | 36,4 |
| Leucine | 63,3 |
| Tyrosine | 34,8 |
| Phenylalanine | 29,8 |
| Histidine | 13,4 |
| Lysine | 67,0 |
| Arginine | 65,8 |
| Tryptophan | 5,7 |
| Cystine/Cysteine | 9,5 |
| Methionine | 18,2 |
| Threonine | 36,7 |
| Taurine | 14,6 |

According to the disclosure, the protein hydrolysates comprise at least 10 mg - such as at least 11 mg, 12 mg, 13 mg, 14 mg taurine pr. g protein, and at least 50 mg, such as at least 55 mg, 60 mg, 61 mg, 62 mg, 63 mg, 64 mg, 65 mg arginine pr. g protein.

Protein hydrolysates may be obtained both by chemical or enzymatic hydrolysis of the raw material, including autolysis. When applying enzymatic hydrolysis of proteins, both endogenous enzymes and exogenous enzymes may be used, alone or in a combination. The hydrolysis conditions obtained by using enzymes result in hydrolysates of good quality, in particular with regard to hydrolysis using heterogeneous enzymes that make it possible to control the degree of hydrolysis. It is also possible to control the content of bitter-tasting compounds such as but not limited to peptides. The enzymatic hydrolysis reaction makes it possible to obtain peptides with varied and desired molecular weights.

According to the present disclosure the hydrolysates are obtained by enzymatic hydrolysis of a crustacean or a marine copepod, preferably a copepod of the genus *Calanus,* such as *Calanus finmarchicus,* using freshly harvested, frozen/thawed or dehydrated raw material. Such raw material is herein referred to as *Calanus* raw material.

The term *"Calanus* hydrolysate" refers to a composition that may be obtained from enzymatic hydrolysis of the *Calanus* raw material. It may also be obtained by other means known to the skilled person. It may be presented both in liquid and in powder form. Table 1 shows the typical composition of protein hydrolysate in liquid form, as obtained with enzymatically hydrolyzing *Calanus* raw material.

According to the disclosure, methods of producing a protein hydrolysate from the *Calanus* raw material is provided, comprising the steps of a) grinding the raw material and mixing in water as necessary, b) heating the raw material to desired temperature, c) adjusting pH and/or salt as necessary, d) adding enzyme(s), e) running hydrolysis for desired time, f) heat-inactivation of the enzyme activity, g) removal of solids and lipids and recovering the protein hydrolysate.

Suitable temperature, pH and hydrolysis time is dependent on the choice of hydrolysis enzymes and will be well known for the person skilled in the art.

Protein hydrolysates obtained by this method is also provided by the disclosure.

### Degree of hydrolysis

Enzymatic breakdown of the protein involves a major structural change in that the protein is gradually cleaved into smaller peptides units. As the degree of enzymatic hydrolysis increases, the solubility of the protein increases. Thus, the molecular weight distribution is a result of the degree of enzymatic hydrolysis, and it affects the solubility of the protein hydrolysate as well as heat and pH resistance. The enhanced solubility of the hydrolysate is due to their smaller molecular size compared with the intact protein (Table 2).

Degree of hydrolysis and solubility are important characteristics of protein hydrolysates believed to affect many of the functional properties. Although increased solubility has a positive relationship to extent of hydrolysis, care must be taken to ensure that the substrate is not too extensively hydrolyzed. A very high degree of hydrolysis may lead to high solubility, but this may have negative effects on the osmolarity and chemical stability. Also, both type of hydrolysis process and degree of hydrolysis may have a negative impact on functional properties such as taste, e.g. bitterness.

**Table 2: The molecular size distribution of the hydrolysate according to the present disclosure, exemplified by Calanus hydrolysate, as grouped in five categories of sizes (Dalton).**

| **MOLECULAR WEIGHT DISTRIBUTION** | |
|---|---|
| DALTON | % |
| > 20 000 | 0,1 |
| 6 000 - 20 000 | 0,6 |
| 1 000 - 6 000 | 12,2 |
| 1 000 - 200 | 34,7 |
| < 200 | 52,5 |

According to the disclosure, at least 70% - preferably at least 75%, 80% or 87% of the total mass of the peptides of these hydrolysates correspond to peptides of lower molecular weight than 1000 Da.

The disclosure may also be a protein hydrolysate wherein at least 30% -preferably at least 35%, 40%, 45%, 50% or 52% of the total mass of peptides of these hydrolytes corresponds to peptides of lower molecular weight than 200 Da.

In addition it is shown that less than 1 %, more preferably less than 0,6 %, of the total mass of peptides corresponds to peptides of higher molecular weight than 6 000 Da, which is a technical feature of this disclosure.

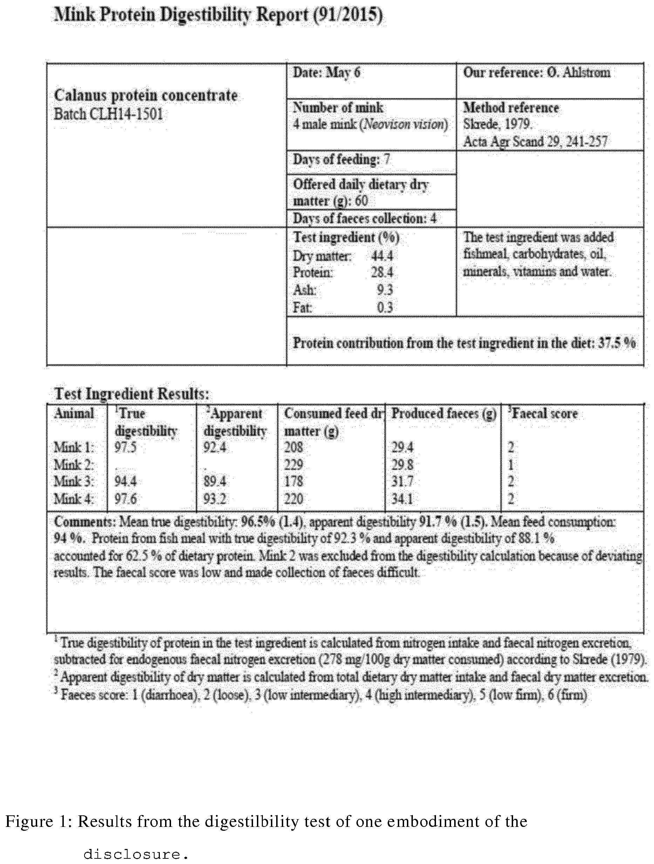

A digestibility test of *Calanus* hydrolysate in mink (*Neovision vision*) have revealed a true digestibility of 96,5 % (see Figure 1) as opposed to low temperature fish meal where digestibility on an average is 90 %. The digestibility test was executed as described in Skrede, 1979 Acta Agr Scand 29, 241-257, and methods used are well known to one skilled in the art. As such, the present disclosure provides a protein hydrolysate, wherein the protein hydrolysate is highly digestible. A highly digestible hydrolysates is to be understood as protein hydrolysates having true digestibility above 90 %, preferably above 92 % or 95 %, as shown in a digestibility test as described herein.

### Pleasant marine flavor

Enzymatic hydrolysis of proteins results in desirable functional properties, but it has the disadvantage of generating bitterness. This is a common problem with fish protein hydrolysates, and a major reason for their slow acceptance as food ingredients. The degree of hydrolysis is important as the size of the peptide also has an impact on bitterness. Large peptides with a low degree of hydrolysis have little or no bitterness. As degree of hydrolysis increases, bitterness may increase. At a certain degree of hydrolysis, bitterness decreases again. While protein hydrolysates are highly nutritious, and functional properties are good, the sensory properties are extremely important for the successful adaptation and acceptance by the food industry.

Accordingly, in the present disclosure it is provided a protein hydrolysate that has a pleasant marine flavor. This pleasant marine flavor was surprisingly discovered by the inventors, and makes the disclosure particularly suitable as a food flavoring agent.

The term "food flavoring agent" as used herein refers to agents acting like flavorings, spices, condiments, seasoning material and food ingredients with flavorings properties. Such a food flavoring agent or food ingredients may be used in compositions for human consumption, such as, but not limited to, soups, sauces, meat and fish products, snacks, and other dishes, as well as for the production of ready-to-cook soups, bouillons, broths, noodles and other human food products.

Protein hydrolysates is described herein, preferably obtained from crustaceans or a marine copepod, preferably a copepod of the genus *Calanus,* such as *Calanus finmarchicus,* as a food flavoring agent or food ingredient for use in compositions for human consumption, such as, but not limited to, soups, sauces, meat and fish products, snacks, and other dishes, as well as for the production of ready-to-cook soups, sauces, bouillons, broths, noodles and other human food products.

The protein hydrolysate may be used either in the form of a liquid concentrate or in powder form. In particular it is suitable in seafood dishes, such as fish soup and bouillabaisses, marine pasta or noodle dishes, snacks and bouillons and other human sea food products.

The protein hydrolysates show favorable characteristics as palatability enhancers. In the examples, results are provided documenting that dogs clearly preferred feed enriched with *Calanus* hydrolysates, both in liquid and powder form, over the standard feed.

It is provided use of protein hydrolysate as a palatability enhancer (PE), to improve the organoleptic properties of a composition for consumption. It is described use of protein hydrolysate as a palatability enhancer in human food products or compositions for consumption; it is provided use of protein hydrolysates to enhance the palatability of an animal feed, preferably a dog or a cat feed. Animal feed comprising the protein hydrolysates is described herein, particularly dog or cat feed.

As shown by the examples, protein hydrolysates may also be employed as palatants in pet supplements products. Compared to commercially available meat and beef flavors, *Calanus* hydrolysate showed superior characteristics as a palatant in a blinded palatability test with dogs. The invention provides a variety of compositions comprising the protein hydrolysates of the present invention, e.g. supplements and pharmaceutical formulations for oral use. The compositions may be dry, moist, liquid, gelled, tableted or canned. When the composition is a liquid, the hydrolysate may be admixed directly into the composition. Where the compositions are solid, the hydrolysate may be coated on the composition, incorporated into the composition, or both.

Pet supplement or pet pharmaceutical products having enhanced palatability comprising the protein hydrolysate is also provided by the present invention. It is also directed to supplements or pharmaceutical products for cats or for dogs.

The present disclosure describes animal feed having enhanced palatability. Such animal feed comprise a protein hydrolysate as described, preferably from 0,1 to 5 % by weight of the composition. It has been demonstrated that animal feed comprising crustacean hydrolysate is preferred by both dogs and cats.

The present invention also includes method of preparing a pet food having enhanced palatability by a) using a palatability-enhancing composition comprising a protein hydrolysate according to the present invention; b) applying said palatability-enhancing composition to the pet food and c) recovering said pet food having enhanced palatability. Relevant methods for manufacturing various types of feed, and for administration of ingredients including the palatability enhancing composition of the present invention, will be obvious for a person skilled in the art.

It is also described a method for increasing the palatability of a composition for consumption. This is achieved by adding a protein hydrolysate as described to any food product.

It should be noted that traditionally fish protein hydrolysates or hydrolysates from other marine sources are provided from waste material such as heads, frames, viscera and skin. Contrary to this, the present protein hydrolysate, when derived from the marine copepod *Calanus finmarchicus,* is extracted from the whole organism, providing a pure extract of hydrolyzed *Calanus finmarchicus.* The marine zooplankter is harvested while feeding on phytoplankton in pristine Arctic waters. Thus, it is provided a hydrolysate product with all naturally occurring water soluble nutrients. The nutritional values and the very pleasant aroma differ from that of any other marine ingredient on the market. The naturally occurring nutrients may be responsible for some of the unique properties observed by the inventors, and makes the hydrolysates particularly eligible for some of the uses as included in the scope of the claims.

For example will the high level of naturally occurring arginine and taurine makes the protein hydrolysate highly preferable in dog and cat food, as these are key ingredients for these animals.

### EXAMPLES

In these examples a protein hydrolysate obtained from *Calanus finmarchicus* is used. The protein hydrolysate is produced by enzymatic hydrolysis of the raw material, and contains features as described in Table 1.

### Example 1:

Pre-testing of protein hydrolysate from *Calanus finmarchicus* in powdered form (CHP) in formulated dog feed.

A liquid protein hydrolysate from *Calanus finmarchicus* (35% dry-matter) was spray-dried using maltodextrin (30% w/w on a dry-matter basis) as a co-drying agent. The dried product, referred to as Calanus Hydrolysate Powder (CHP) was added at 0,5% inclusion level to a commercially available complete feed (Royal Canin Medium Adult, Royal Canin Norge AS) for adult dogs. CHP was added by sprinkling onto the pellets. The feed was offered dry (without prior soaking with water). Pellets with CHP were tested on three different female adult dogs (1 Dachshund Wire-Haired and two Gordon Setters) in a two bowl setup. In a two bowl set-up each dog is offered 2 bowls. In each bowl is equal amounts of feed, one with CHP added and one with the standard feed with no additive, as a control. The three dogs were one by one offered the two bowls of feed. These dogs are normally fed once daily, usually in the late afternoon. The amount of feed in each bowl amounted to half the daily ration for each dog. The dogs had free access to water.

All the three dogs preferred the feed sprinkled with CHP. The dogs all started to eat from the CHP-enriched feed. In all the cases the bowl with feed enriched with CHP was emptied before the dogs started to eat from the second bowl containing the standard feed. This initial experiment was repeated the following two days with the same outcome.

In conclusion, the dogs clearly preferred the feed enriched with CHP over the standard feed.

### Example 2:

Protein hydrolysate from *Calanus finmarchicus* in liquid concentrated form (CHL) as a palatant in formulated feed for dogs.

A liquid concentrate of protein hydrolysate from *Calanus finmarchicus* (50% drymatter), referred to as Calanus Hydrolysate Liquid (CHL), was tested with the same dogs and according to the same two bowl set-up as described in Example 1. This time the feed pellets were soaked with water prior to feeding. The recommended daily ration of a commercially available premium feed (Appetitt Adult Maintenance, Agripet AS) was distributed with equal amounts in two bowls, and soaked with an equal amount (w/w) of lukewarm tap water for 20-30 minutes prior to feeding. To one of the bowls, CHL was added in an amount of 1% of the feed (w/w), mixed into the water used to soak the pellets. The three dogs were (one at a time) offered two bowls with or without CHL. The bowls were placed close to each other on the floor in an arbitrary fashion and the dogs were free to choose. The experiment was conducted for 6 consecutive days.

In 16 of the 18 cases (n=3x6), the dogs started to eat from the bowl containing the feed enriched with CHL, and emptied this bowl before moving to the feed without CHL. In one of the two cases where a dog started to eat on the control diet first, the dog switched to the bowl containing CHL before finishing the standard feed, whereas in the other two cases the bowl with the control diet was emptied first.

In conclusion, all the dogs clearly preferred the feed enriched with CHL over the standard feed.

### Example 3:

Testing of protein hydrolysate from *Calanus finmarchicus* compared to beef and meat flavor in a blinded palatability test with dogs.

Three products were tested for potential use as palatants in pet supplements products. ConCordix® chewable soft-drops (Ayanda AS), was used as a carrier in this experiment. ConCordix®, hereinafter referred to as CCX, is a delivery system for nutraceutical and pharmaceutical supplements such as e.g. omega-3 essential fatty acids and vitamins. The experiment was conducted in Utrecht University Faculty of Veterinary Medicine (Utrecht, The Netherlands), using adult Beagles as test animals. CCX, each dosage weighing approx. 1 g, was formulated and labelled (blinded) by Ayanda AS using the following palatants:
- Sample A: Commercially available Beef Flavor, beef meat type, in dry/powder form (Symrise AG), dosage 10% (w/w)
- Sample B: Calanus Hydrolysate Liquid, CHL (50% drymatter), dosage 2% (w/w)
- Sample C: Commercially available Meat Flavor, pork note, roasty, in dry/powder form (Symrise AG), dosage 5% (w/w)

Dosages were partially determined by recommendations from the suppliers of the palatants, and partially on basis of results from initial pilot testing for acceptance with dogs.

### Set up (2 bowl test):

- Each dog is offered 2 bowls. In each bowl is 1 CCX dosage - 1 flavor in bowl 1 and another flavor in bowl 2.
- The bowls stay for 10 minutes before taken away. First approach, which is eaten first, is recorded.
- The dog tests same 2 flavors against each other 12 times per day for 4 days.
- The dog eats a standard food during the entire palatability test.
- The 3 flavors in all were tested against each other (A+B, A+C, B+C). 4 days x 3 tests = 12 days in all.
- 13 dogs participated in the test (adult Beagles).

### Results:

**Table 3: Scores for each set up from the 2 bowl test.**

| | Meat Flavor vs. Beef Flavor | | | Meat Flavor vs. Calanus Hydrolysate | | | Beef Flavor vs. Calanus Hydrolysate | | |
|---|---|---|---|---|---|---|---|---|---|
| Palatant | C | A | | C | B | | A | B | |
| Scores | 150 | 95 | | 124 | 147 | | 88 | 156 | |
| T-test | | | 0,381 | | | 0,102 | | | 0,0009 |

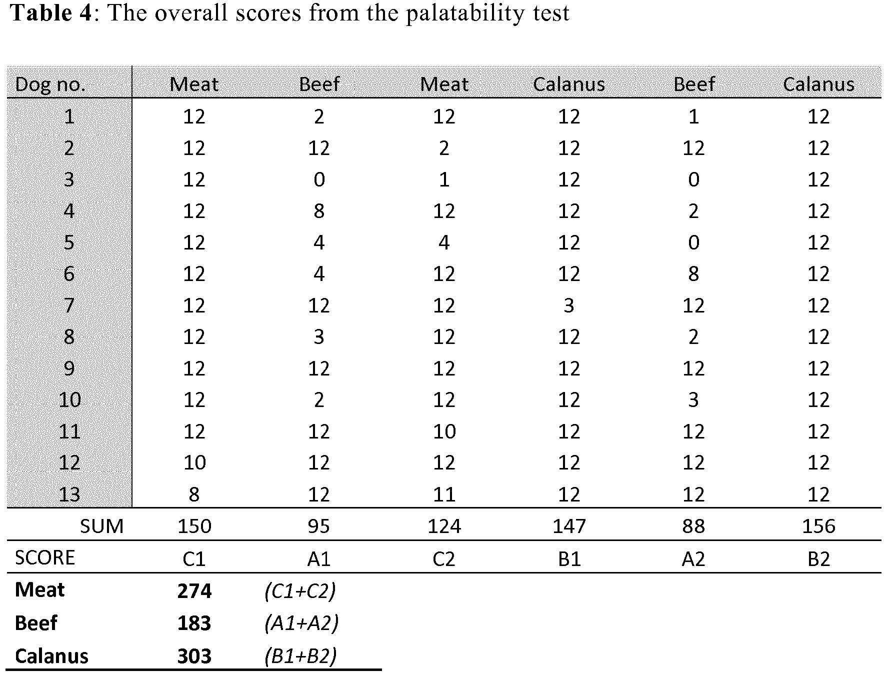

Overall scores:
o B (Calanus Hydrolysate Liquid: 303
o C (Meat Flavor): 274
o A (Beef Flavor): 183

### Conclusions:

- Calanus Hydrolysate Liquid (CHL) had the highest overall score of the three palatants used in this test.
- Statistical analysis shows that CHL was significantly more palatable compared to Beef Flavor (p=0.0009), but not compared to Meat Flavor (p=0.102)
- Calanus Hydrolysate Liquid (B) was significantly more palatable than Beef Flavor (A), and more palatable than Meat Flavor (C), despite its use at a much lower inclusion level.

### Example 4:

Comparing protein hydrolysate from *Calanus finmarchicus* and protein hydrolysate from Atlantic salmon as palatants in formulated dog food.

Calanus Hydrolysate Liquid (CHL) was compared with a commercially available salmon protein hydrolysate (SPH) in paste (liquid) form, derived from farmed Atlantic salmon by-products (Salmigo®, Marine Bioproducts AS). Dry matter content of both CHL and SPL was measured and the drymatter content of SPL was adjusted to 50% by mixing in water to balance that of CHL. CHL and SPH were tested against each other using the same dog feed, the same three dogs and according to the same two-bowl fashion as described in Example 2. The daily ration was divided in equal amounts in two bowls, soaked with an equal amount of luke springwater for 20-30 minutes prior to feeding. CHL or SPH was added in an amount of 1% of the feed (w/w) via the water used to soak the pelleted feed. The three dogs were individually offered two bowls with feed enriched with CHL or SPL, respectively, for 7 consecutive days.

In 18 of the 21 cases (n=3x7), the dogs preferred the feed enriched with CHL. In 3 of the 21 cases, the dogs preferred the feed enriched with SPL, although in one of these cases the dog switched between the two bowls several times. In conclusion, the dogs clearly preferred the feed enriched with CHL over feed enriched with SPH.

### Example 5:

Testing of protein hydrolysate from *Calanus finmarchicus* in liquid concentrated form as a palatant in cat-feed.

A liquid concentrate of protein hydrolysate from *Calanus finmarchicus* (50% dry-matter), referred to as Calanus Hydrolysate Liquid (CHL), was tested as a palatant in feed for two adult female cats in a two-bowl fashion. The cats used in this example had free access to both feed and water during the test period. The cats were normally fed *ad-libitum* with a dry pelleted feed. During the whole test period the cats could come and go and eat as they pleased, and there were neither dietary restriction nor control over feed intake.

In a first experiment, a commercially available moist feed (Sheba Selection in Sauce, with lamb and chicken, Mars Norge AS) was used. Calanus Hydrolysate Liquid (CHL), 50% dry matter, was mixed into a portion in an amount of 1%. A portion enriched with CHL and a control portion was added to two different bowls, which was placed on the floor where the cats normally feed. The two cats ate simultaneously from the bowl containing the feed enriched with CHL. Thus they clearly preferred this over the control, which was not eaten until later.

In a second experiment, the dry feed usually given these cats (Purina Friskies with beef/chicken, Nestlé Norge AS) was enriched with CHL. 10 ml of water, with or without 1 ml CHL, was gently mixed to 100 g of the feed. The feed was thereafter allowed to dry at room temperature for 24 hours before use. The cats were offered two bowls of 100 g feed with or without 1% CHL, respectively. The bowls were placed on the floor where the cats normally feed. It was then recorded which bowl was emptied first. In this case, the cats ate from both bowls, but the feed without CHL was emptied first.

In a third experiment, another commercially available dry feed (Matmons, with fish, Felleskjoepet Agri) was tested in the same way as in the second experiment. This time, the cats clearly preferred the feed enriched with CHL which was emptied first.

In summary, the cats preferred two of the three feeds enriched with CHL over the control feeds without CHL.

### Example 6 (not according to the invention):

Testing of protein hydrolysate from *Calanus finmarchicus* in liquid concentrated form (CHL) as a food flavoring agent in food.

A soup and sauce stock - CHL stock - was prepared by a professional chef by mixing CHL with water (40:60). The stock was gently simmered and added fried shallots, chopped tomato and cream. The CLH stock was then used as basis for a soup, or as a basis for a sauce.

The soup was prepared by adding a filtered stock made from fried Alaskan king crab shells in addition to peeled Atlantic shrimps and ramson to the CHL stock, and then further simmered. Fresh herbs were added (for decoration) prior to serving. The sauce was made by further concentrating the CHL stock by gently boiling it, before adding Sibret-chives. Both the soup and the sauce were adjusted by spices, at the discretion of the chef.

The soup was served on its own, whereas the sauce was used generously in a dish with fried fillet of common ling (*Molva molva*)*,* puree of green peas, and fried green asparguses. Both dishes, the soup followed by the fish, were served with French white wine (Chenin, Domaine Souyris 2012).

The acceptability of the two dishes was evaluated by a panel of six adult men, using the 9-point hedonic scale:
1. Like Extremely
2. Like Very Much
3. Like Moderately
4. Like Slightly
5. Neither Like nor Dislike
6. Dislike Slightly
7. Dislike Moderately
8. Dislike Very Much
9. Dislike Extremely

The average score for the CHL-based soup was 2,2 (n=6), whereas the average score for the CHL-based sauce was 1,5 (n = 6). Comments were made that both the soup and the sauce had a new or different but very pleasant shellfish-like flavor, with a long, dry aftertaste. Additional comments were made that the soup was a little strong, with some bitter aftertaste, and that the amount of CHL could be somewhat reduced or alternatively, that the taste could be balanced by adding a sweetener to the soup.

In any event, the test showed that the dishes were either very much or extremely well liked, and thus it may be clearly concluded that CHL may be used as an ingredient in food.

## Claims

1. Use of protein hydrolysate derived from a copepod of the genus *Calanus,* wherein 70 % of the peptides of these hydrolysates are of lower molecular weight than 1000 Da, as a palatability enhancer in a composition for consumption by a cat or dog.

2. Use according to claims 1, wherein the composition is a dog or cat feed, such as complete feed, in dry or pellet form or in moist form or in canned forms, in treats or in snacks.

3. Use according to claims 1, wherein the composition is a pet supplement product or pet pharmaceutical product.

4. Use according to claim 3, wherein the pet supplement or pet pharmaceutical product is for a dog.

5. Use according to claim 3, wherein the pet supplement or pet pharmaceutical product is for a cat.

6. A pet supplement product having enhanced palatability comprising protein hydrolysate derived from a copepod of the genus *Calanus,* wherein 70 % of the peptides of the protein hydrolysate are of lower molecular weight than 1000 Da, wherein the pet supplement product contains from 0.1 to 5 % by weight of said protein hydrolysate.

7. A pet supplement product according to claim 6, wherein the product comprises a pet supplement being a substance offered separately from formulated feed intended for specific benefit to the animal by means other than provision of nutrients recognized as essential..

8. A pet supplement product according to any of claim 6 or 7, wherein the pet supplement is a nutraceutical.

9. A pet supplement product according to claim 6, wherein the product is a pet pharmaceutical product.

10. A pet supplement product according to any of claims 6-9 wherein the product is gelled or tableted.

11. A pet supplement product according to any of claims 6-9 wherein the product is a chewable soft-drop and the protein hydrolysate is liquid *Calanus* hydrolysate.

12. A method of preparing an animal feed for a dog or cat having enhanced palatability by:
i) using a palatability-enhancing composition comprising a protein hydrolysate derived from a copepod of the genus *Calanus,* wherein 70 % of the peptides of these hydrolysates are of lower molecular weight than 1000 Da,
ii) applying said palatability-enhancing composition to the animal feed
iii) recovering said animal feed having enhanced palatability

## Patentansprüche

1. Verwendung von Proteinhydrolysat, das von einem Kopepoden der Gattung *Calanus* stammt, wobei 70 % der Peptide dieser Hydrolysate ein geringeres Molekulargewicht als 1000 Da aufweisen, als Geschmacksverstärker in einer Zusammensetzung zum Verzehr durch eine Katze oder einen Hund.

2. Verwendung nach Anspruch 1, wobei die Zusammensetzung ein Hunde- oder Katzenfutter, beispielsweise ein Alleinfuttermittel, in trockener oder pelletierter Form oder in feuchter Form oder in Dosenformen, in Leckerlis oder in Snacks ist.

3. Verwendung nach Anspruch 1, wobei es sich bei der Zusammensetzung um ein Haustiernahrungsergänzungsprodukt oder ein Haustierarzneimittelprodukt für Haustiere handelt.

4. Verwendung nach Anspruch 3, wobei das Haustiernahrungsergänzungsprodukt oder Haustierarzneimittelprodukt für einen Hund bestimmt ist.

5. Verwendung nach Anspruch 3, wobei das Haustiernahrungsergänzungsmittel oder Haustierarzneimittel für eine Katze bestimmt ist.

6. Haustiernahrungsergänzungsprodukt mit erhöhter Schmackhaftigkeit, umfassend ein Proteinhydrolysat, das von einem Kopepoden der Gattung *Calanus* stammt, wobei 70 % der Peptide des Proteinhydrolysats ein geringeres Molekulargewicht als 1000 Da aufweisen, wobei das Haustiernahrungsergänzungsprodukt 0,1 bis 5 Gew.-% des Proteinhydrolysats enthält.

7. Haustiernahrungsergänzungsprodukt nach Anspruch 6, wobei das Produkt ein Haustiernahrungsergänzungmittel umfasst, die eine Substanz ist, die getrennt von formuliertem Futter angeboten wird und für einen spezifischen Nutzen für das Tier durch andere Mittel als die Bereitstellung von als essentiell anerkannten Nährstoffen bestimmt ist.

8. Haustiernahrungsergänzungsprodukt nach einem der Ansprüche 6 oder 7, wobei das Haustiernahrungsergänzungsmittel ein Nutrazeutikum ist.

9. Haustiernahrungsergänzungsprodukt nach Anspruch 6, wobei das Produkt ein Arzneimittelprodukt für Haustiere ist.

10. Haustiernahrungsergänzungsprodukt nach einem der Ansprüche 6 bis 9, wobei das Produkt geliert oder in Tablettenform vorliegt.

11. Haustiernahrungsergänzungsprodukt nach einem der Ansprüche 6-9, wobei das Produkt ein kaubarer Soft-Drop ist und das Proteinhydrolysat flüssiges *Calanus-*Hydrolysat ist.

12. Verfahren zur Herstellung eines Tierfutters für einen Hund oder eine Katze mit verbesserter Schmackhaftigkeit durch:
i) Verwendung einer die Schmackhaftigkeit verbessernden Zusammensetzung, die ein Proteinhydrolysat umfasst, das von einem Kopepoden der Gattung *Calanus* stammt,
wobei 70 % der Peptide dieser Hydrolysate ein geringeres Molekulargewicht als 1000 Da aufweisen,
ii) Aufbringen der die Schmackhaftigkeit erhöhenden Zusammensetzung auf das Tierfutter,
iii) Gewinnen des Tierfutters mit verbesserter Schmackhaftigkeit.

## Revendications

1. Utilisation d'un hydrolysat protéique dérivé d'un copépode du genre *Calanus,* dans laquelle 70% des peptides de ces hydrolysats possèdent un poids moléculaire inférieur à 1000 Da, en tant qu'agent améliorant la palatabilité dans une composition destinée à une consommation par un chat ou un chien.

2. Utilisation selon la revendication 1, dans laquelle la composition est un aliment pour chien ou pour chat, tel qu'un aliment complet, sous forme sèche ou de boulettes, ou sous forme humide ou dans des formes en conserve, dans des friandises ou dans des encas.

3. Utilisation selon la revendication 1, dans laquelle la composition est un produit de complément pour animaux de compagnie ou un produit pharmaceutique pour animaux de compagnie.

4. Utilisation selon la revendication 3, dans laquelle le produit de complément pour animaux de compagnie ou produit pharmaceutique pour animaux de compagnie est destiné à un chien.

5. Utilisation selon la revendication 3, dans laquelle le produit de complément pour animaux de compagnie ou produit pharmaceutique pour animaux de compagnie est destiné à un chat.

6. Produit de complément pour animaux de compagnie possédant une palatabilité améliorée, comprenant un hydrolysat protéique dérivé d'un copépode du genre *Calanus,* dans lequel 70% des peptides de l'hydrolysat protéique possèdent un poids moléculaire inférieur à 1000 Da, dans lequel le produit de complément pour animaux de compagnie contient entre 0,1 et 5% en poids dudit hydrolysat protéique.

7. Produit de complément pour animaux de compagnie selon la revendication 6, dans lequel le produit comprend un complément pour animaux de compagnie qui est une substance fournie séparément d'un aliment formulé conçu pour apporter un bénéfice spécifique à l'animal par un moyen autre qu'un apport de nutriments reconnus comme essentiels.

8. Produit de complément pour animaux de compagnie selon l'une quelconque de la revendication 6 ou 7, dans lequel le complément pour animaux de compagnie est un nutraceutique.

9. Produit de complément pour animaux de compagnie selon la revendication 6, dans lequel le produit est un produit pharmaceutique pour animaux de compagnie.

10. Produit de complément pour animaux de compagnie selon l'une quelconque des revendications 6 à 9, dans lequel le produit est gélifié ou sous forme de comprimés.

11. Produit de complément pour animaux de compagnie selon l'une quelconque des revendications 6 à 9, dans lequel le produit est une pastille molle à mâcher et l'hydrolysat protéique est un hydrolysat liquide de *Calanus.*

12. Procédé de préparation d'un aliment pour animal destiné à un chien ou à un chat possédant une palatabilité améliorée par :
i) l'utilisation d'une composition améliorant la palatabilité comprenant un hydrolysat protéique dérivé d'un copépode du genre *Calanus,* dans laquelle 70% des peptides de ces hydrolysats possèdent un poids moléculaire inférieur à 1000 Da,
ii) l'application de ladite composition améliorant la palatabilité à l'aliment pour animal
iii) la récupération dudit aliment pour animal possédant une palatabilité améliorée.
